# FASCICULE DE BREVET EUROPEEN

(11) **EP 0 728 815 B1**
(45) Date de publication et mention de la délivrance du brevet: **04.08.2004**
(21) Numéro de dépôt: 96400130.9
(22) Date de dépôt: 19.01.1996
(51) Int. Cl.: C08L 95/00

(54) **Procédé de préparation de compositions bitume-polymère**
Verfahren zur Herstellung von Bitumen-Polymerzusammensetzungen
Process for preparing bitumen-polymer compositions

(30) Priorité: 25.01.1995 FR 9500830
(43) Date de publication de la demande: 28.08.1996
(73) Titulaire: TotalFinaElf France, 92800 Puteaux (FR)
(72) Inventeur: Jolivet, Yannick, F-76600 Le Havre (FR); Jamois, Didier, F-76310 Sainte Adresse (FR); Malot, Michel, F-76210 Bolbec (FR)
(74) Mandataire: Jolly, Jean-Pierre

(56) Documents cités:
- EP-A- 0 174 795
- EP-A- 0 234 615
- EP-A- 0 645 433
- WO-A-90/10036
- FR-A- 2 580 658
- DATABASE WPI Section Ch, Week 8711 Derwent Publications Ltd., London, GB; Class A93, AN 87-076526 XP002004033 & JP-A-62 030 153 (JAPAN SYNTHETIC RUBBER) , 9 Février 1987

## Description

La présente invention concerne un procédé de préparation de compositions bitume-polymère stables au stockage.

Le bitume est un matériau viscoélastique : il tend à devenir dur et cassant aux basses températures; il se ramollit et peut fluer aux températures élevées. Sa sensibilité à la température varie selon son origine et son procédé de fabrication.

Il peut être obtenu, notamment, à partir du pétrole brut, comme résidu de distillation de celui-ci et/ou comme brai de désasphaltage de la fraction lourde issue de la (ou les) distillation(s). Le bitume est constitué, selon l'origine du pétrole brut, de proportions variables d'huiles paraffiniques (aliphatiques ou naphténiques) et aromatiques, de résines et d'asphaltènes (pour plus de détails, on peut se reporter au brevet EP-B-246 956, dont la Demanderesse est titulaire).

L'accroissement des sollicitations des revêtements routiers, dû à une densité du trafic plus intense, à des forces d'accélération et de freinage des véhicules plus élevées, ainsi qu'à l'évolution du profil des poids lourds équipés maintenant de trois à quatre essieux arrières, ce qui augmente le temps d'application de la charge, nécessite l'adaptation de liants bitumineux allant dans le sens d'une augmentation de leur durabilité.

Il est bien connu de modifier le bitume par addition d'un polymère, en vue d'améliorer cette durabilité. L'addition d'un polymère au bitume a pour objectifs :
- de diminuer la susceptibilité thermique des bitumes, en élargissant l'intervalle de plasticité (par augmentation de la température de ramollissement et/ou par diminution de la température de fragilité à froid),
- d'augmenter la résistance à la déformation, ainsi que le seuil de rupture.

Il a ainsi été prouvé que les performances d'une composition bitume-polymère dûment sélectionnée sont supérieures à celles d'un bitume non additionné de polymère. Cependant, les problèmes de compatibilité des composants polymère et bitume pour atteindre le meilleur compromis entre les performances d'usage et la stabilité au stockage sont très difficiles à résoudre. C'est pourquoi de nombreux brevets revendiquent des compositions et/ou des procédés pour les obtenir qui sont censés apporter des solutions à ces problèmes.

On peut citer la demande de brevet EP-A-234 615, selon laquelle le mélange bitumineux contient un bitume, un additif aromatique et deux blocs copolymères, le second bloc contenant impérativement un solvant dudit additif aromatique.

Un mélange préalable est ici effectué à partir de l'additif aromatique et des deux blocs copolymères, de manière à faciliter ensuite son incorporation dans le bitume.

La composition ainsi obtenue possède certes une plus grande compatibité entre les copolymères et le bitume, mais le choix des deux blocs copolymères et la préconstitution de ce mélange intermédiaire s'avèrent contraignants car, à la fois limitatifs et compliqués à mettre en oeuvre.

On peut également citer la demande de brevet européen EP-A-458 386, qui revendique un procédé pour obtenir une composition bitume-polymère stable dans les conditions de fluidité existant pendant le stockage à chaud, ce procédé consistant à mélanger à une température comprise entre 200 et 250 °C et pendant une durée (dépendant de la température) comprise entre 45 minutes et 15 heures:
- de 85 à 98 % en poids de bitume sélectionné parmi les bitumes qui ont une pénétrabilité comprise entre 30 et 220 dixièmes de mm à 25°C, un point de ramollissement compris entre 35 et 55 °C, et un indice de pénétrabilité compris entre -1,5 et +1,5, et
- de 15 à 2% en poids d'un copolymère "styrène-butadiène-styrène" (dit SBS) séquencé, ayant une structure étoilée ou linéaire.

Pour les raisons qui apparaîtront ci-après, le procédé décrit dans EP-A-458 386 ne permet cependant pas d'obtenir de façon systématique des compositions bitume-polymère stables au stockage et ayant une bonne tenue à la température. En effet, le fait d'utiliser 85 à 98 % en poids de bitume sélectionné parmi les bitumes qui ont une pénétrabilité comprise entre 30 et 220 dixièmes de mm à 25°C, un point de ramollissement compris entre 35 et 55°C et un indice de pénétrabilité compris entre -1,5 et +1,5, n'apporte pas l'assurance d'obtenir de manière certaine et à partir de n'importe quel bitume des compositions bitume-polymère stables au stockage.

On peut également formuler la même remarque concernant la demande française FR-A-2 643 643 (correspondant à WO-A-10036), dans laquelle on considère uniquement un certain type de bitume, en l'occurence un bitume dur de pénétrabilité comprise entre 10 et 20 dixièmes de mm à 25°C, et de point de ramollissement compris entre 65 et 75°C.

On sait enfin par EP-A-0 645 433 que, pour un type déterminé de bitume et de polymère, il est possible d'obtenir un mélange présentant un point de FRAASS et une différence bille et anneau satisfaisants en y incorporant au moins un composé aromatique. Il faut toutefois procéder à des essais préliminaires pour déterminer la quantité de composés aromatiques à utiliser en vue d'obtenir un mélange ayant les propriétés désirées.

Comme EP-A-0 645 433, la présente invention vise à la préparation de compositions bitume-polymère ayant des propriétés physiques améliorées et stables au stockage, dans lesquelles sont incorporés un ou des composés aromatiques, mais à l'aide d'un procédé dans lequel, quels que soient le bitume et le polymère de la composition, la teneur en composés aromatiques à utiliser peut être fixée à l'avance sans avoir à effectuer d'essais préliminaires.

La Demanderesse a, en effet, mis en évidence le fait que, pour préparer une composition bitumineuse par mélange d'un bitume quelconque, d'un ou plusieurs copolymère(s)et d'une quantité minimale de certains composés aromatiques, le choix d'un rapport particulier de la teneur en cycles aromatiques à la teneur en copolymère(s) se traduit systématiquement par de très bonnes propriétés de tenue à froid et de stabilité au stockage de la composition.

L'invention a par conséquent pour objet un procédé de préparation d'une composition bitume-polymère aromatique possédant un point de FRAASS égal ou inférieur à -13°C et une stabilité au stockage définie par son "Δ bille-anneau" et son "Δ pénétrabilité" inférieurs ou égaux à 5, ce procédé comportant le mélange de :
a) 25 à 97 % en poids d'un bitume,
b) 1 à 25 % en poids d'un copolymère ou plus,
c) 2 à 50 % en poids de composés aromatiques ayant une teneur en cycles aromatiques supérieure à 50% en poids
ce procédé étant caractérisé en ce que :
- la teneur du mélange en composés aromatiques, dont le point initial de distillation est supérieur à 200°C, est supérieure à 2 % en poids,
- le rapport entre la teneur en cycles aromatiques du mélange et sa teneur en copolymère est compris entre 0,5 et 10.

Dans cet objet de l'invention et dans la suite de la présente description, la pénétrabilité est mesurée conformément à la norme AFNOR NFT 66004, le point de ramollissement est déterminé conformément à la norme AFNOR NFT 66008 (il est dit "bille-anneau" en raison de la méthode employée), l'indice de pénétrabilité est déterminé conformément à la méthode des Ponts et Chaussées RLB1-1964, et le point de Fraass, indicateur de la fragilité à froid, est déterminé conformément à la norme AFNOR T66-026. La stabilité au stockage est déterminée en stockant à 165° C pendant 4 jours un échantillon de la composition dans un récipient cylindrique et en déterminant la température "bille-anneau" et la pénétrabilité des couches supérieure et inférieure de l'échantillon.

On peut ainsi obtenir les différences "delta" bille-anneau et "delta" pénétrabilité entre les couches supérieure et inférieure. Plus les delta (notés Δ par la suite) sont faibles, plus les compositions sont stables.

On notera que, dans les compositions conformes à l'invention, on peut utiliser n'importe quel bitume, à la différence de FR-A-2 643 643.

Ce bitume peut être un bitume qui sera appelé ci-après bitume "naturel", pour le différencier du bitume "synthétique" décrit plus loin. Ce bitume naturel peut en particulier être tiré du pétrole brut, des schistes bitumineux, d'huiles lourdes, de sable bitumineux ou même de charbon.

Le bitume naturel peut être, par exemple :
a) la fraction la plus lourde obtenue par distillation directe sous pression atmosphérique ou sous pression réduite d'un pétrole brut ;
b) la phase lourde obtenue par désasphaltage au solvant d'une fraction lourde obtenue selon a) ;
c) le produit de l'oxydation, en présence ou non de catalyseurs, d'une fraction lourde selon a) ou d'une phase lourde selon b) ;
d) le produit de l'oxydation, en présence ou non de catalyseurs d'un mélange d'une fraction lourde selon a) ou d'une phase lourde selon b) et
   - d'un distillat, ou
   - d'un extrait aromatique obtenu dans la désaromatisation des huiles lubrifiantes, ou
   - d'un brai de désasphaltage
e) un mélange d'un produit oxydé obtenu selon c) et d) ou d'une phase dure, et
   - d'un distillat, ou
   - d'un extrait aromatique obtenu dans la désaromatisation des huiles lubrifiantes, ou
   - d'un brai de désasphaltage, ou
   - d'une fraction lourde selon a) ou d'une phase lourde selon b) ;
f) une base viscoréduite, seule ou en mélange avec un ou plusieurs des produits ci-dessus ;
g) un des produits obtenus en a) et en f) en mélange avec
   - un distillat, ou
   - un extrait aromatique obtenu dans la désaromatisation des huiles lubrifiantes, ou
   - un brai de désasphaltage, ou
   - une fraction lourde aromatique ("slurry catalytique") issue d'un procédé de craquage catalytique.

Le bitume utilisable peut être également un bitume synthétique ayant des caractéristiques voisines de celles d'un bitume "naturel" tel que décrit ci-dessus, par exemple un liant synthétique clair colorable par addition de pigments. Il peut être, par exemple, constitué de résines de pétrole ou de résine indène-coumarone en mélange avec des hydrocarbures aromatiques et/ou paraffiniques. De telles résines de pétrole peuvent être préparées par polymérisation d'hydrocarbures insaturés présents dans des fractions pétrolières insaturées, telles que les fractions obtenues par craquage thermique ou à la vapeur d'eau ou par pyrolyse. De leur côté, les résines indène-coumarone sont généralement obtenues à partir des goudrons de houille.

On remarquera qu'un unique copolymère peut être utilisé dans les compositions conformes à l'invention, à la différence de EP-A-234 615.

Ce copolymère peut être, par exemple, un plastomère ou un polymère présentant des chaînes hydrocarbonées à hydrogène mobile, notamment choisi dans le groupe constitué par les caoutchoucs synthétiques, comme les copolymères de styrène et de butadiène statistiques, S.B.R. ("styrene-butadiene-rubber"), ou séquencés, S.B.S. ("styrène-butadiène-styrène"), linéaires ou étoilés, ou S.I.S. styrène- isoprène-styrène").

Le bitume est choisi, du point de vue de sa constitution, pour avoir une bonne compatibilité avec le polymère en adaptant les teneurs respectives de bitume en hydrocarbures saturés, en aromatiques, en résines et en asphaltènes.

La composition bitume-polymère préparée par le procédé selon l'invention peut contenir jusqu'à 25 % en poids de copolymère, la teneur en copolymère étant choisie en fonction de la nature du copolymère, du bitume et des qualités désirées pour l'utilisation visée.

Dans le cas des applications routières (enrobés, enduits superficiels, émulsions), la composition bitume-polymère obtenue contient de préférence de 2 à 7 % en poids de copolymère :
- en dessous de 2 % en poids de copolymère, l'addition de polymère dans le bitume est considérée comme ayant peu d'effet sur les propriétés de la composition,
- au-dessus de 7 % en poids de copolymère, le prix du polymère rend trop onéreuse l'application routière. En outre, la viscosité de la composition augmente et devient incompatible avec le matériel utilisé pour ces applications. Mais, dans le cas d'applications industrielles telles que par exemple les chapes d'étanchéité, la composition contient de préférence plus de copolymère, souvent plus de 10 % en poids, pour obtenir au contraire une viscosité élevée et une température de bille-anneau élevée, de manière à résister à la température.

La composition obtenue par le procédé selon l'invention peut contenir un copolymère de styrène et de butadiène, statistique ou séquencé, notamment séquencé (SBS), linéaire ou étoilé. Il peut s'agir de mélanges de différents copolymères (et/ou d'un même copolymère de caractéristiques différentes, par exemple de masses moléculaires différentes.

Certains bitumes présentent une aromaticité intrinsèque mais, dans la plupart des applications, celle-ci s'avère généralement insuffisante pour conférer à la composition finale des propriétés nécessaires de stabilité au stockage et de tenue à froid.

Aussi, le composé aromatique qu'il est nécessaire d'ajouter conformément à l'invention peut être issu des coupes suivantes: coupes provenant de la conversion non hydrogénante (en particulier des coupes issues du craquage catalytique, du craquage thermique, du coking, de la viscoréduction, de la pyrolyse), de la désaromatisation des bases lubrifiantes, de la désaromatisation des coupes pétrolières (par exemple au furfural), ou d'un mélange d'une ou plusieurs de ces coupes.

Le composé aromatique est ajouté en une quantité variable selon sa nature et l'origine du bitume utilisé, mais le mélange utilisé a, de préférence, une teneur en cycles aromatiques supérieure à 4 % en poids.

Les composés aromatiques utilisés sont issus de coupes pétrolières aromatiques de point initial de distillation supérieur à 200°C, de préférence supérieur à 300°C, et présentent les caractéristiques suivantes :
- une viscosité cinématique supérieure à 5 mm²/s à 100°C, de préférence supérieure à 20 mm²/s,
- un point éclair Cleveland supérieur à 170°C, de préférence supérieur à 200°C, et
- une teneur en cycles aromatiques supérieure à 50 % en poids, de préférence supérieure à 65 % en poids.

Le point initial de distillation est mesuré selon la norme ASTM D-1160, la viscosité cinématique est mesurée selon la norme ASTM D2170, le point éclair est mesuré selon la norme AFNOR EN 22592 et la teneur en cycles aromatiques est mesurée par la méthode "SARA" de chromatographie en phase liquide HPLC publiée par le GSEE (Groupement Scientifique Européen de l'Etanchéité) dans les cahiers du CSTB N° 2555.

D'autre part, la Demanderesse a mis en évidence le fait que plus la teneur en copolymère dans le mélange de départ est importante, plus la composition bitume-polymère ainsi préparée doit posséder d'aromaticité pour être stable au stockage et présenter une bonne tenue à froid. Inversement, lorsque la teneur en copolymère est moins importante, une faible aromaticité du mélange suffit pour conférer de bonnes propriétés à la composition bitume-polymère résultante.

La Demanderesse considère comme essentielle cette proportionnalité entre la teneur en cycles aromatiques et la teneur en copolymère dans la composition bitume-polymère, et c'est ainsi que, conformément à l'invention, le rapport de la teneur en cycles aromatiques à la teneur en copolymère est compris entre 0,5 et 10, le rapport optimal étant compris entre 0,8 et 6. Les valeurs de ce rapport varient selon l'origine des bruts pétroliers dont sont issus les bitumes et selon le type de composés aromatiques considérés.

Le procédé conforme à l'invention est mis en oeuvre à une température de préférence comprise entre 190 et 300°C, plus particulièrement entre 220 et 260°C, pendant un temps de préférence supérieur à 30 minutes. On ajoute un composé aromatique au bitume avant l'introduction du copolymère dans le bitume et/ou ultérieurement, en ajoutant, par exemple au bitume le copolymère sous forme d'une solution du copolymère dans le composé aromatique.

La composition bitume-polymère obtenue par le procédé de l'invention allie une bonne stabilité au stockage et une bonne tenue à froid.

Cette composition peut être utilisée notamment avec des granulats ou charges classiques dans des applications routières :
a) en l'état, pour la réalisation d'enrobés ayant une bonne tenue à l'orniérage et une excellente résistance à la fatigue;
b) en l'état, ou fluxée par une coupe hydrocarbonée, pour la réalisation d'émulsions aqueuses bitumineuses ayant d'excellentes caractéristiques de vitesse de rupture et une excellente tenue mécanique;
c) fluxée par une coupe hydrocarbonée, pour la réalisation d'enduits superficiels anhydres à hautes performances mécaniques.

La composition obtenue par le procédé conforme à l'invention est donc un liant multifonctionnel.

Les exemples qui suivent sont destinés à illustrer l'invention de façon non limitative.

### EXEMPLE 1

Cet exemple concerne la préparation selon l'invention de différentes compositions à partir d'un copolymère P et de différents bitumes B, et leur comparaison avec des compositions bitume-polymère de l'état de la technique.

### 1. Copolymère P :

Le copolymère est un copolymère "styrène-butadiène-styrène" SBS de type étoilé, ayant les caractéristiques suivantes:
- rapport massique styrène-butadiène : 30%,
- masse moléculaire en poids Mw : 300 000.

### 2. Bitumes B:

On dispose de cinq bitumes B₁, B₂, B₃, B₄ et B₅, dont les caractéristiques sont données dans le Tableau I ci-après.

**TABLEAU I**

| **Bitumes** | **B**_{**1**} **(2)** | **B**_{**2**} **(2)** | **B**_{**3**} **(2)** | **B**_{**4**} **(2)** | **B**_{**5**} **(2)** |
|---|---|---|---|---|---|
| Bille-anneau en °C | 46,2 | 55,2 | 50,9 | 51,0 | 65,5 |
| Pénétrabilité en 1/10e de mm à 25°C | 86 | 42 | 61 | 63 | 16 |
| Point de FRAASS en °C (1) | -15 | -9 | -11 | -12 | -3 |

| | | | | | |
|---|---|---|---|---|---|
| (1) Le point de FRAASS est un indicateur de la fragilité à froid et est déterminé conformément à la norme AFNOR T66-026. | | | | | |
| (2) Les bitumes B₁, B₂, B₃, B₄ et B₅ sont obtenus en mélangeant deux bases bitumineuses BA et BB conformément au Tableau II ci-après. | | | | | |

**TABLEAU II**

| **Bitumes** | **% de BA** | **% de BB** |
|---|---|---|
| B₁ | 30 | 70 |
| B₂ | 60 | 40 |
| B₃ | 45 | 55 |
| B₄ | 40 | 60 |
| B₅ | 100 | 0 |

La base BA est un résidu sous vide de distillation directe (base dure) issu d'un mélange de bruts contenant 50% de brut type Maya et 50% de brut type Isthmus.

La base BB est un résidu sous vide de distillation directe (base molle) issu d'un mélange de bruts contenant 50% de brut type Maya et 50% de brut type Isthmus.

Les caractéristiques des bases bitumineuses sont données dans le Tableau III ci-après.

**TABLEAU III**

| **Bases bitumineuses** | **BA** | **BB** |
|---|---|---|
| Bille-anneau en °C | 65,5 | 40 |
| Pénétrabilité en 1/10è de mm à 25°C | 16 | 182 |

### 3 - Compositions bitume-polymère à caractère aromatique :

On mélange en quantités variables un bitume B1, B2, B3, B4 ou B5, le copolymère P et un composé aromatique pouvant être A1 ou A2, tous deux issus de la désaromatisation des coupes pétrolières au furfural, ou A3, issu de la coupe "slurry", (c'est-à-dire du résidu de distillation des effluents d'une unité de craquage catalytique, après séparation de la coupe HCO (High Cycle Oil)).

Le composé A1 présente un point initial de distillation de 430°C, une viscosité cinématique à 100°C comprise entre 50 et 75 mm2/s, un point éclair Cleveland supérieur ou égal à 230°C et une teneur en cycles aromatiques de 81, 4 % en poids. Ces mesures sont effectuées suivant les normes définies dans la description.

Le composé A2 présente un point initial de distillation de 400°C, une viscosité cinématique à 100°C comprise entre 24 et 39 mm²/s, un point éclair Cleveland supérieur ou égal à 220°C et une teneur en cycles aromatiques de 82,2 % en poids.

Le composé A3 présente un point initial de distillation de 350°C, une viscosité à 100°C de l'ordre de 17 mm2/s et une teneur en cycles aromatiques de 68,1 % en poids.

On procède d'abord au mélange du bitume et du composé aromatique, puis on ajoute à 250°C et pendant 2 heures le copolymère P.

Les compositions obtenues, notées de 1 à 7, sont présentées dans le Tableau IV ci-après.

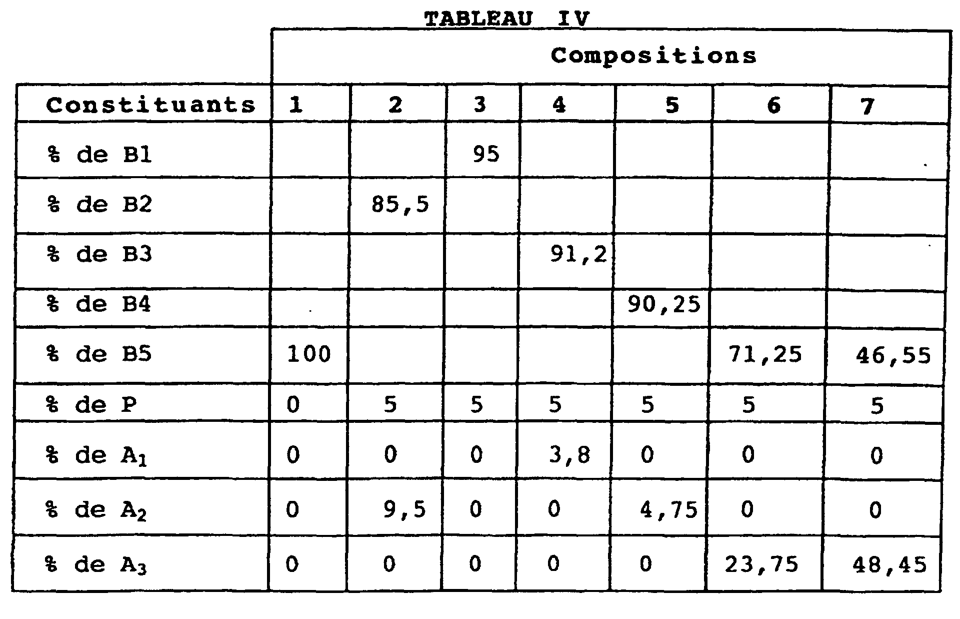

Les caractéristiques des compositions obtenues sont données dans le Tableau V ci-après.

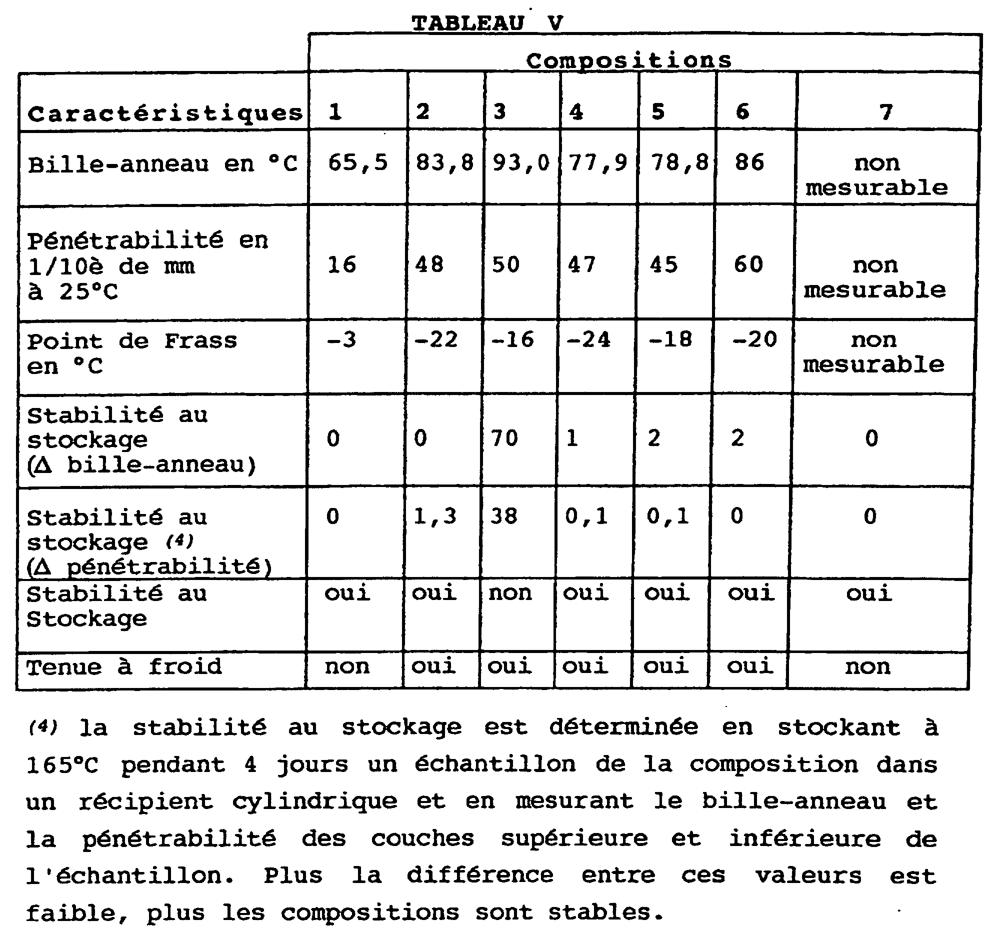

Ce Tableau V montre bien que les compositions selon l'invention, c'est-à-dire ayant une teneur en cycles aromatiques supérieure à 2 % et dont le rapport teneur, en cycles aromatiques sur teneur en copolymère est compris entre 0,5 et 10 ont à la fois un bon point de FRAASS et une bonne stabilité au stockage.

### EXEMPLE 2

Cet exemple concerne une variante du procédé de préparation des compositions bitume-polymère à caractère aromatique selon l'invention.

Dans cet exemple, la composition est obtenue par préparation d'une solution-mère de copolymère-composé aromatique que l'on incorpore ensuite au bitume.

Le copolymère choisi est le copolymère P de l'Exemple 1 et le composé aromatique est le composé noté A₂ dans l'Exemple 1.

Le Tableau VI présente les caractéristiques des solutions-mères S₁ et S₂ ainsi préparées.

**TABLEAU VI**

| **Solutions-mères** | **S**_{**1**} | **S**_{**2**} |
|---|---|---|
| % de P | 19 | 19 |
| % de A2 | 81 | 81 |
| Température de mélange (°C) | 200 | 180 |
| Durée de mélange (heures) | 1 | 3 |
| Quantité (Kg) | 0,8 | 3 |

On mélange ensuite les solutions-mères préparées au bitume B5 de l'Exemple 1 dans les conditions de mélange définies dans le Tableau VII ci-après.

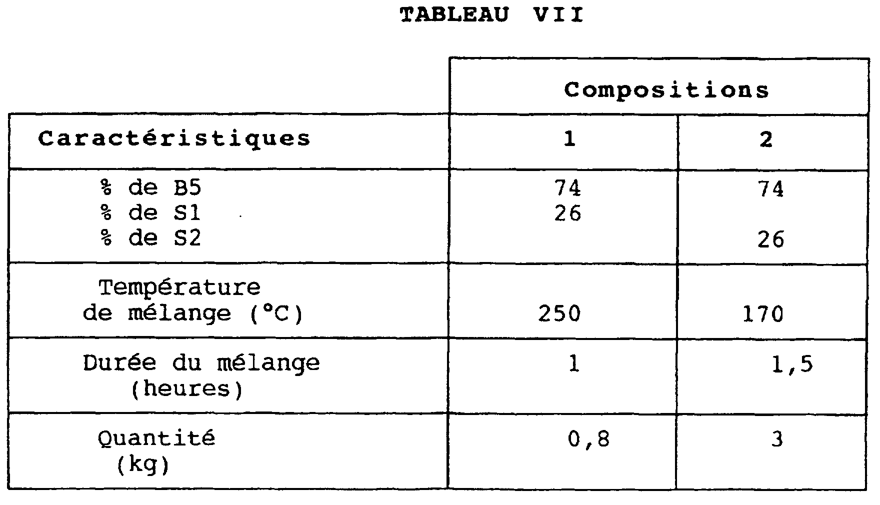

Les caractéristiques des compositions obtenues sont présentées dans le Tableau VIII ci-après.

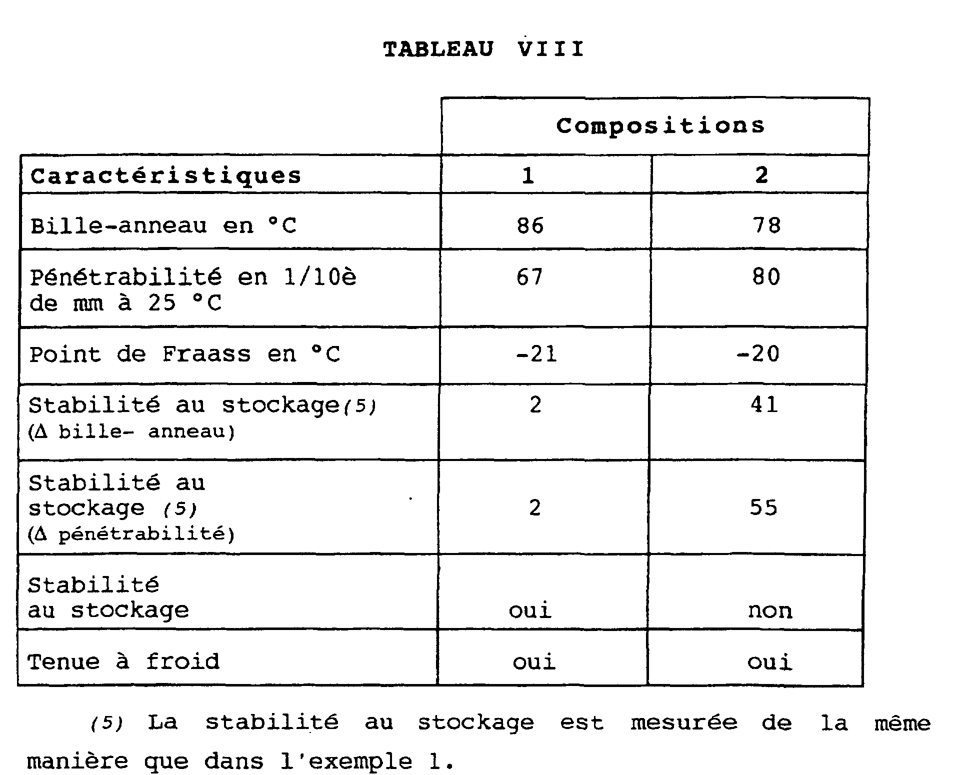

Ce Tableau VIII montre bien que les compositions bitume-polymère à caractère aromatique préparées dans les conditions opératoires selon l'invention et en incorporant dans le bitume un copolymère en solution dans un composé aromatique présentent une bonne tenue à froid et une bonne stabilité au stockage.

## Revendications

1. Procédé de préparation d'une composition bitume-polymère aromatique possédant un point de FRAASS égal ou inférieur à -13°C et une stabilité au stockage définie par son Δ bille-anneau" et son "Δ pénétrabilité inférieurs ou égaux à 5, ce procédé comprenant le mélange de :
a) 25 à 97 % en poids d'un-bitume,
b) 1 à 25 % en poids d'un copolymère ou plus,
c) 2 à 50 % en poids de composés aromatiques provenant de coupes pétrolières aromatiques ayant une teneur en cycles aromatiques supérieure à 50% en poids
ce procédé étant **caractérisé en ce que**
- la teneur du mélange en composés aromatiques, dont le point initial de distillation est supérieur à 200°C, est supérieure à 2 % en poids,
- le rapport entre la teneur en cycles aromatiques du mélange et sa teneur en copolymère est comprise entre 0,5 et 10,

2. Procédé selon la revendication 1, **caractérisé en ce que** les composés aromatiques du mélange proviennent de coupes pétrolières aromatiques et ont une teneur en cycles aromatiques supérieure ou égale à 65 % en poids.

3. Procédé selon la revendication 2, **caractérisé en ce que** les coupes pétrolières aromatiques présentent un point initial de distillation supérieur à 200° C, de préférence supérieur à 300°C.

4. Procédé selon l'une des revendications 1 à 3, **caractérisé en ce que** les composés aromatiques du mélange ont une viscosité cinématique supérieure à 5 mm²/s à 100°C, de préférence supérieure à 20 mm²/s.

5. Procédé selon l'une des revendications 1 à 4, **caractérisé en ce que** les composés aromatiques du mélange ont un point éclair Cleveland supérieur à 170° C, de préférence supérieur à 200° C.

6. Procédé selon l'une des revendications 1 à 5, **caractérisé en ce que** la teneur en cycles aromatiques du mélange est supérieure à 4 % en poids.

7. Procédé selon l'une des revendications 1 à 6, **caractérisé en ce que** le rapport entre la teneur en cycles aromatiques du mélange et sa teneur en copolymère est compris entre 0,8 et 6.

8. Procédé selon l'une des revendications 1 à 7, **caractérisé en ce que** le copolymère du mélange est un copolymère présentant des chaînes hydrocarbonées à hydrogène mobile et choisi dans le groupe constitué par les caoutchoucs synthétiques, comme les copolymères styrene-butadiene statistiques S.B.R. ("styrene-butadiene-rubber") ou séquencés S.B.S. ("styrène-butadiène-styrène"), linéaires ou étoilés, ou S.I.S. ("styrène-isoprène-styrène").

9. Procédé selon l'une des revendications 1 à 8, **caractérisé en ce que** le copolymère du mélange est un copolymère "styrène-butadiène-styrène" linéaire ou séquencé.

10. Procédé selon l'une des revendications 1 à 9, **caractérisé en ce que** le mélange comprend un bitume "naturel".

11. Procédé selon l'une des revendications 1 à 10, **caractérisé en ce que** le mélange comprend un bitume "synthétique".

12. Procédé selon l'une des revendications 1 à 11, **caractérisé en ce que** l'on mélange le bitume, le copolymère et le composé aromatique à une température comprise entre 190 et 300°C, de préférence entre 220 et 260°C, pendant une durée de préférence supérieure à 30 minutes.

13. Procédé selon la revendication 12, **caractérisé en ce que** l'on ajoute le composé aromatique préalablement au mélange bitume-polymère, ou préalablement au bitume et/ou au polymère, et/ou au cours du mélange.

## Patentansprüche

1. Verfahren zur Herstellung einer Bitumen-polymere-Aromatenzusammensetzung mit einem FRAASS-Punkt von gleich oder weniger als -13°C und einer Lagerstabilität, definiert als ihr "Δ-Kugelring (bille-anneau)" und ihrer "Δ-Penetrabilität" von weniger oder gleich 5, wobei das Verfahren das Vermischen von:
a) 25 bis 97 Gew.-% eines Bitumens,
b) 1 bis 25 Gew.-% eines oder mehrerer Copolymere,
c) 2 bis 50 Gew.-% aromatischer Verbindungen, die aus aromatischen Petroleumschnitten stammen, mit einem Gehalt an aromatischen Ringen von mehr als 50 Gew.-%
umfasst, wobei das Verfahren **dadurch gekennzeichnet ist, dass**
- der Gehalt des Gemisches an aromatischen Verbindungen mit einem Anfangssiedepunkt mehr als 200°C mehr als 2 Gew.-% beträgt,
- und das Verhältnis zwischen dem Gehalt an aromatischen Ringen im Gemisch und seinem Gehalt an Copolymer zwischen 0,5 und 10 liegt.

2. Verfahren nach Anspruch 1, **dadurch gekennzeichnet, dass** die aromatischen Verbindungen im Gemisch aus aromatischen Petroleumschnitten stammen und einen Gehalt an aromatischen Ringen von mehr oder gleich 65 Gew.-% haben.

3. Verfahren nach Anspruch 2, **dadurch gekennzeichnet, dass** die aromatischen Petroleumschnitte einen Anfangssiedepunkt von mehr als 200°C, vorzugsweise von mehr als 300°C, haben.

4. Verfahren nach einem der Ansprüche 1 bis 3, **dadurch gekennzeichnet, dass** die aromatischen Verbindungen im Gemisch bei 100°C eine kinematische Viskosität von mehr als 5 mm²/s, vorzugsweise von mehr als 20 mm²/s haben.

5. Verfahren nach einem der Ansprüche 1 bis 4, **dadurch gekennzeichnet, dass** die aromatischen Verbindungen im Gemisch einen Cleveland-Klärungspunkt von mehr als 170°C, vorzugsweise von mehr als 200°C, haben.

6. Verfahren nach einem der Ansprüche 1 bis 5, **dadurch gekennzeichnet, dass** der Gehalt an aromatischen Ringen im Gemisch mehr als 4 Gew.-% beträgt.

7. Verfahren nach einem der Ansprüche 1 bis 6, **dadurch gekennzeichnet, dass** das Verhältnis zwischen dem Gehalt an aromatischen Ringen im Gemisch und seinem Gehalt an Copolymer zwischen 0,8 und 6 liegt.

8. Verfahren nach einem der Ansprüche 1 bis 7, **dadurch gekennzeichnet, dass** das Copolymer des Gemisches ein Copolymer darstellt, welches Kohlenwasserstoffketten mit mobilem Wasserstoff zeigt und aus der Gruppe, bestehend aus synthetischen Kautschuken, wie statistischen Styrol-Butadien-Copolymeren S.B.R. ("styrene-butadiene-rubber) oder sequenzierten linearen oder sternförmigen S.B.S. ("Styrol-Butadien-Styrol") oder S.I.S. ("Styrol-Isopren-Styrol") ausgewählt ist.

9. Verfahren nach einem der Ansprüche 1 bis 8, **dadurch gekennzeichnet, dass** das Copolymer im Gemisch ein lineares oder sequenziertes "Styrol-Butadien-Styrol" darstellt.

10. Verfahren nach einem der Ansprüche 1 bis 9, **dadurch gekennzeichnet, dass** das Gemisch ein "natürliches" Bitumen enthält.

11. Verfahren nach einem der Ansprüche 1 bis 10, **dadurch gekennzeichnet, dass** das Gemisch ein "synthetisches" Bitumen enthält.

12. Verfahren nach einem der Ansprüche 1 bis 11, **dadurch gekennzeichnet, dass** man das Bitumen, das Copolymer und die aromatische Verbindung bei einer Temperatur zwischen 190 und 300°C, vorzugsweise zwischen 220 und 260°C, über einen Zeitraum von vorzugsweise mehr als 30 Minuten vermischt.

13. Verfahren nach Anspruch 12, **dadurch gekennzeichnet, dass** man die aromatische Verbindung erst dem Bitumen-Polymergemisch oder erst dem Bitumen- und/oder Polymergemisch und/oder während der Vermischung zusetzt.

## Claims

1. A method of preparing an aromatic bitumen-polymer composition having a FRAASS point equal to or lower than -13°C and a stability during storage defined by its "ball-and-ring Δ" and its "Δ penetrability" lower than or equal to 5, this method comprising the mixing of:
a) 25 to 97 % by weight of a bitumen,
b) 1 to 25 % by weight of one or more copolymers,
c) 2 to 50 % by weight of aromatic compounds originating from aromatic petroleum fractions having a content of aromatic rings greater than 50 % by weight,
said method being **characterised in that**
- the content of the mixture of aromatic compounds, whose initial distillation point is higher than 200°C, is greater than 2 % by weight,
- the ratio between the content of aromatic rings of the mixture and its copolymer content is between 0.5 and 10.

2. A method according to claim 1, **characterised in that** the aromatic compounds of the mixture originate from aromatic petroleum fractions and have a content of aromatic rings greater than or equal to 65 % by weight.

3. A method according to claim 2, **characterised in that** the aromatic petroleum fractions have an initial distillation point higher than 200°C, preferably higher than 300°C.

4. A method according to any one of claims 1 to 3, **characterised in that** the aromatic compounds of the mixture have a kinematic viscosity higher than 5 mm²/s at 100°C, preferably higher than 20 mm²/s.

5. A method according to any one of claims 1 to 4, **characterised in that** the aromatic compounds of the mixture have a Cleveland flash point higher than 170°C, preferably higher than 200°C.

6. A method according to any one of claims 1 to 5, **characterised in that** the content of aromatic cycles of the mixture is greater than 4 % by weight.

7. A method according to any one of claims 1 to 6, **characterised in that** the ratio between the content of aromatic rings of the mixture and its copolymer content is between 0.8 and 6.

8. A method according to any one of claims 1 to 7, **characterised in that** the copolymer of the mixture is a copolymer having hydrocarbon chains with mobile hydrogen and selected from the group comprising the synthetic rubbers, such as the random styrene-butadiene SBR copolymers (styrene-butadiene rubber) or the block SBS copolymers (styrene-butadiene-styrene), linear or star-shaped, or SIS (styrene-isoprene-styrene) .

9. A method according to any one of claims 1 to 8, **characterised in that** the copolymer of the mixture is a linear or block styrene-butadiene-styrene copolymer.

10. A method according to any one of claims 1 to 9, **characterised in that** the mixture comprises a "natural" bitumen.

11. A method according to any one of claims 1 to 10, **characterised in that** the mixture comprises a "synthetic" bitumen.

12. A method according to any one of claims 1 to 11, **characterised in that** the bitumen, the copolymer and aromatic compound is mixed at a temperature of between 190 and 300°C, preferably between 220 and 260°C, for a period of preferably longer than 30 minutes.

13. A method according to claim 12, **characterised in that** the aromatic compound is added beforehand to the bitumen-polymer mixture, or beforehand to the bitumen and/or to the polymer, and/or in the course of the mixing.
